(19) Europäisches Patentamt / European Patent Office / Office européen des brevets

(11) **EP 3 696 839 B1**

(12) **FASCICULE DE BREVET EUROPEEN**

(45) Date de publication et mention
de la délivrance du brevet:
**27.10.2021 Bulletin 2021/43**

(21) Numéro de dépôt: **20156394.7**

(22) Date de dépôt: **10.02.2020**

(51) Int Cl.:
*H01H 9/44* *(2006.01)*  *H01H 1/64* *(2006.01)*
*H01H 33/04* *(2006.01)*  *H01R 13/53* *(2006.01)*
*H02G 3/08* *(2006.01)*  *H02K 5/22* *(2006.01)*
*H02K 11/20* *(2016.01)*  *H01H 33/08* *(2006.01)*

(54) **DISPOSITIF DE PROTECTION D'AU MOINS DEUX CÂBLES ÉLECTRIQUES CONTRE UN ARC ÉLECTRIQUE**

SCHUTZVORRICHTUNG VON MINDESTENS ZWEI ELEKTROKABELN GEGEN EINEN LICHTBOGEN

DEVICE FOR PROTECTING AT LEAST TWO ELECTRICAL CABLES AGAINST AN ELECTRIC ARC

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2019 FR 1901381**

(43) Date de publication de la demande:
**19.08.2020 Bulletin 2020/34**

(73) Titulaires:
- **ALSTOM Transport Technologies**
  **93400 Saint-Ouen (FR)**
- **SNCF Voyageurs**
  **93200 Saint-Denis (FR)**

(72) Inventeurs:
- **CREUNET, Christophe**
  **67000 STRASBOURG (FR)**
- **HINTZY, Florian**
  **67000 STRASBOURG (FR)**

(74) Mandataire: **Lavoix**
**2, place d'Estienne d'Orves**
**75441 Paris Cedex 09 (FR)**

(56) Documents cités:
EP-A1- 2 431 989       EP-A1- 3 147 920
EP-A2- 1 956 620       DE-T5-112015 002 740
FR-A1- 3 050 885       US-A- 5 004 874
US-A1- 2003 003 788    US-A1- 2011 114 602

EP 3 696 839 B1

**Description**

La présente invention concerne un dispositif de protection d'au moins deux câbles électriques contre un arc électrique. La présente invention concerne également un système d'alimentation.

Plus particulièrement, la présente invention concerne le domaine de l'alimentation électrique des véhicules ferroviaires et plus précisément la protection des équipements électriques.

Le document US 5 004 874 A décrit un appareil de commutation de courant continu.

Le document DE 11 2015 002 740 T5 décrit un dispositif conducteur avec un disjoncteur et une chambre à arc.

Le document FR 3 050 885 A1 décrit un bornier pour une machine électrique, la machine électrique présentant deux bornes de phases, le bornier comprenant deux platines de connexion et, pour chaque platine de connexion, des moyens de fixation de l'une des bornes de phases et d'une borne secondaire d'alimentation en énergie électrique de, et/ou de réception d'énergie électrique émise à, la borne de phase concernée. Une cloison intermédiaire isolante du bornier est interposée entre les platines de connexion.

On connaît déjà, dans l'état de la technique, des systèmes d'alimentation de véhicules ferroviaires comprenant une connexion électrique reliant une unité d'alimentation et un moteur électrique, par exemple un moteur de traction. Par exemple, l'unité d'alimentation est fixée sur le toit du véhicule ferroviaire et le moteur électrique est disposé dans un bogie du véhicule ferroviaire.

La connexion électrique comprend des câbles d'alimentation comprenant des bornes électriques et des interrupteurs.

Lors d'une génération d'une tension dans les câbles d'alimentation, un arc électrique peut se générer entre les câbles. Plusieurs sources d'arcs électriques sont connues.

Par exemple, le moteur électrique peut être un moteur comprenant des aimants permanents. Les aimants permanents génèrent à chaque instant un champ magnétique. Lorsque le stator du moteur électrique est en rotation, une tension est induite dans des bornes électriques du moteur. Cette tension est susceptible de provoquer un arc électrique dans le système d'alimentation et notamment entre les câbles.

De tels arcs électriques sont très destructifs pour les systèmes d'alimentation, notamment pour les câbles d'alimentation de ces systèmes.

Afin de protéger les systèmes d'alimentation contre la propagation de tels arcs dans le système d'alimentation, des dispositifs de protection sont connus. Typiquement, des matériaux protecteurs sont interposés entre les câbles ainsi qu'entre les câbles et l'environnement.

Cependant, lorsque les matériaux protecteurs sont exposés pendant une durée élevée aux arcs électriques, ces matériaux sont dégradés et ne protègent ainsi plus le système d'alimentation. En conséquence, pour éviter une progression des arcs électriques, les matériaux protecteurs doivent être remplacés fréquemment.

De tels dispositifs de protection ne sont donc pas entièrement satisfaisants.

Un but de l'invention est donc proposer un dispositif de protection et un système d'alimentation présentant une meilleure capacité de résistance contre des arcs électriques, tout en garantissant une protection suffisante du système d'alimentation ainsi qu'une opération simple du système d'alimentation.

À cet effet, l'invention a pour objet un dispositif de protection selon la revendication 1.

Le dispositif de protection permet d'obtenir une meilleure protection des câbles contre un arc électrique, en exposant l'arc électrique au champ magnétique et ainsi en modifiant la direction de propagation de l'arc électrique. En particulier, les éléments de guidage permettent de canaliser le champ magnétique de manière à ce que l'arc électrique soit dévié. En conséquence, les câbles sont moins exposés aux arcs électriques.

Lorsque l'arc électrique est dévié vers le corps du dispositif de protection, les ailettes permettent de fragmenter un arc électrique s'étendant entre deux câbles en plusieurs arcs fragmentés d'intensité réduite. Par exemple, ces arcs fragmentés s'éteignent entre les ailettes. Les ailettes contribuent ainsi à la capacité de résistance du dispositif de protection.

Le dispositif de protection selon l'invention peut être selon l'une quelconque des revendications 2 à 7.

L'invention a également pour objet un système d'alimentation selon la revendication 8.

De manière optionnelle, le système d'alimentation est selon la revendication 9.

L'invention sera mieux comprise à la lecture de la description qui va suivre, donnée uniquement à titre d'exemple, et faite en se référant aux dessins annexés, sur lesquels :

-  [Fig 1] la figure 1 est une représentation schématique d'un système d'alimentation selon un exemple de mode de réalisation de l'invention ;
-  [Fig 2] la figure 2 est une représentation schématique en perspective d'un dispositif de protection du système d'alimentation de la figure 1 ;
-  [Fig 3] la figure 3 est une représentation schématique en perspective du dispositif de protection de la figure 2 montrant la déviation d'un arc électrique ;
-  [Fig 4] la figure 4 est une représentation schématique en perspective du dispositif de protection de la figure 2 montrant la déviation d'un arc électrique ;
-  [Fig 5] la figure 5 est une représentation schématique en coupe d'une partie du dispositif de protection de la figure 4.

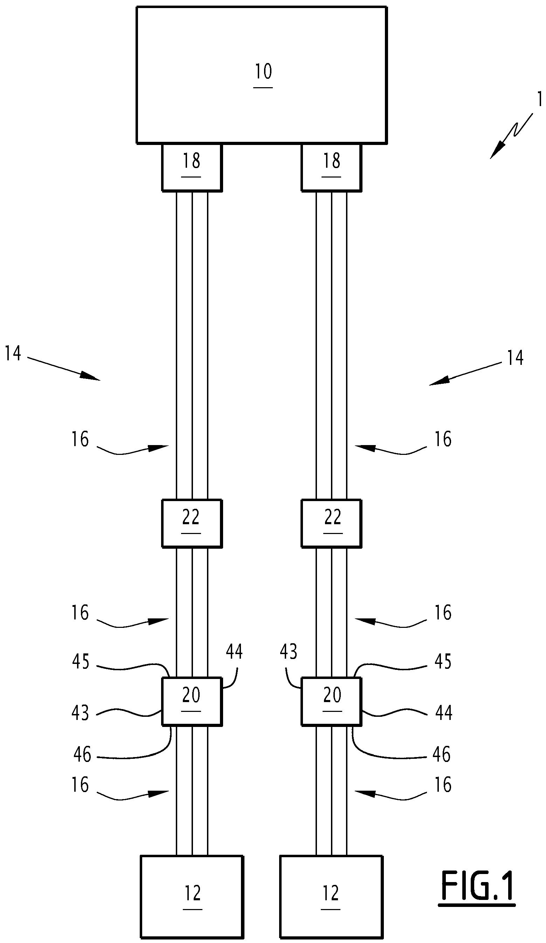

On a représenté, sur la figure 1, un système d'alimentation 1 pour un véhicule ferroviaire. Le système d'alimentation 1 comprend une unité d'alimentation 10, deux moteurs électriques 12 et deux connexions électriques 14 connectant chacune l'unité d'alimentation 10 à l'un respectif des moteurs 12.

En variante, non représentée, le système d'alimentation comprend une seule connexion électrique et un seul moteur électrique.

En variante encore, non représentée, le système d'alimentation comprend au moins trois moteurs, et trois connexions électriques connectant chacune l'unité d'alimentation à un moteur électrique respectif.

L'unité d'alimentation 10 est par exemple disposée sur un toit du véhicule ferroviaire (non représenté). Par exemple, l'unité d'alimentation 10 est connectée d'une part à une caténaire (non représentée) et d'autre part aux connexions électriques 14.

L'unité d'alimentation 10 est configurée pour transférer une puissance électrique depuis la caténaire vers la connexion électrique 14.

Chaque moteur électrique 12 est destiné à être alimenté par la connexion électrique 14 correspondante. Chaque moteur électrique 12 est, par exemple, un moteur à courant alternatif. Plus particulièrement, dans l'exemple représenté, chaque moteur électrique 12 est un moteur triphasé. Il est configuré pour être alimenté par un courant circulant dans trois câbles électriques 16.

Chaque moteur électrique 12 est, par exemple, un moteur de traction du véhicule ferroviaire.

Chaque moteur électrique 12 comprend, par exemple, des aimants permanents. Lors d'un déplacement du train en absence d'une alimentation électrique du moteur 12, les aimants permanents génèrent une tension dans la connexion électrique 14. Une telle tension est susceptible de provoquer des arcs électriques.

Chaque connexion électrique 14 comprend, dans l'exemple de la figure 1, un connecteur 18, un interrupteur 22 et un dispositif de protection 20, connectés en série par les câbles électriques 16.

Dans ce qui suit, l'une des connexions électriques 14 va être décrite plus en détails, les autres connexions électriques 14 étant identiques.

Dans l'exemple de la figure 1, la connexion électrique 14 comprend trois câbles 16 connectant l'unité d'alimentation 10 et le moteur 12 correspondant. Les trois câbles 16 sont configurés pour alimenter le moteur électrique 12 correspondant.

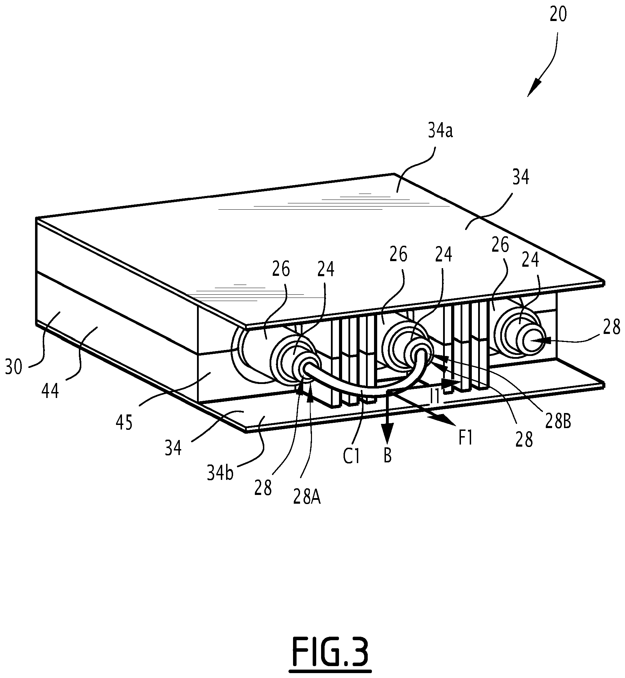

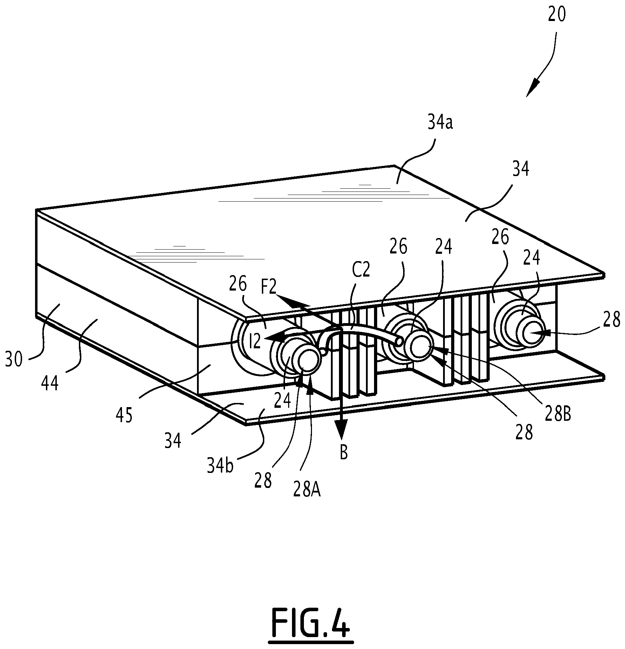

Chaque câble 16 comprend une âme conductrice 24 et une gaine 26 de câble, et présente des extrémités formant des bornes électriques 28 (dont l'une de chaque câble est visible en particulier sur les figures 3 et 4).

Le connecteur 18 est par exemple un contact maie. Le connecteur 18 est destiné à connecter l'unité d'alimentation 10 au câble électrique 16.

L'interrupteur 22 est destiné à permettre d'interrompre la liaison électrique entre l'unité d'alimentation 10 et le moteur 12 correspondant. Un tel interrupteur 22 est connu par l'homme du métier. Il est à noter qu'un arc électrique est susceptible de se former dans l'interrupteur 22 ou entre les bornes électriques 28.

Le dispositif de protection 20 est notamment destiné à arrêter la propagation de l'arc électrique le long des câbles 16.

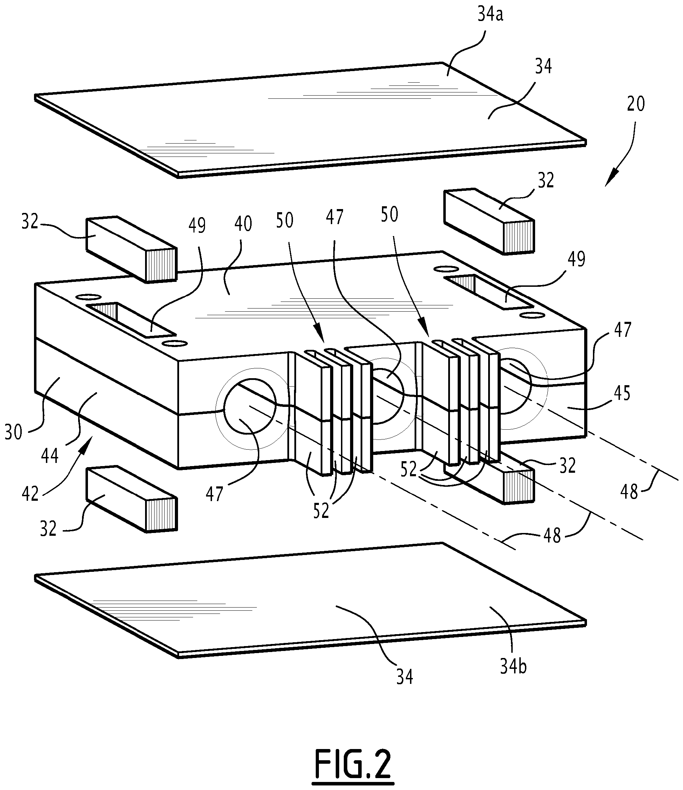

Le dispositif de protection 20, représenté plus en détail sur la figure 2, comprend un corps 30, des éléments magnétiques 32 et des premier et second éléments de guidage 34a, 34b.

Selon un exemple, non représentée, le dispositif de protection 20 comprend un seul élément magnétique 32.

Le corps 30 comprend un matériau isolant séparant les câbles électriques 16 l'un de l'autre.

Le corps 30 présente une forme générale de parallélépipède comprenant une première face, par exemple appelée face supérieure 40, et une deuxième face, par exemple appelée face inférieure 42 opposée à la face supérieure 40. La face supérieure 40 et la face inférieure 42 sont disposées de part et d'autre de la face avant 45.

Les faces supérieure 40 et inférieure 42 sont notamment parallèles entre elles. Le corps 30 comprend en outre des faces latérales 43, 44 et des faces avant 45 (visible par exemple sur la figure 2) et arrière 46. Les faces latérales 43, 44 et les faces avant 45 et arrière 46 sont perpendiculaires aux faces supérieure 40 et inférieure 42. Les faces latérales 43, 44 sont, en outre, perpendiculaires aux faces avant 45 et arrière 46.

On notera que les appellations « supérieure », « inférieure », « latérale », « avant » et « arrière » sont arbitrairement basées sur la figure 2, sans présumer d'une quelconque orientation dans le système d'alimentation.

Dans l'exemple de la figure 1, la face avant 45 est orientée vers l'unité d'alimentation 10 et la face arrière 46 est orientée vers le moteur électrique 12.

Le corps 30 présente, dans l'exemple représenté, des orifices 47, configurés pour recevoir un câble électrique 16 respectif, les orifices 47 étant ménagés dans la face avant 45.

Le corps 30 comprend au moins une paire d'orifices 47. Dans l'exemple représenté, le corps 30 présente trois orifices 47 alignés parallèlement aux faces supérieure 40 et inférieure 42.

Chaque orifice 47 s'étend selon un axe d'orifice 48. Par exemple, chaque axe d'orifice 48 s'étend parallèlement aux faces supérieure 40 et inférieure 42 du corps 30 et perpendiculairement à la face avant 45. L'ensemble des axes d'orifices 48 est, par exemple, compris dans un plan d'axes. Le plan d'axes est, par exemple, parallèle aux première et seconde faces 40, 42.

Le corps 30 présente, en outre, par exemple des premières cavités 49 sur la face supérieure 40, et des secondes cavités sur la face inférieure 42. Sur l'exemple des figures, uniquement les premières cavités 49 sont visibles.

Les premières et secondes cavités 49 sont notamment configurées pour recevoir un ou plusieurs éléments magnétiques 32. Plus précisément, les premières cavités 49 sont configurées pour recevoir des premiers éléments magnétiques 32 et les secondes cavités sont configurées pour recevoir des seconds éléments magnétiques 32.

De préférence, les premiers éléments magnétiques 32 sont identiques aux seconds éléments magnétiques 32.

Les éléments magnétiques 32 sont, par exemple, des aimants permanents. Les éléments magnétiques 32 sont, dans l'exemple représenté, orientés de manière à générer un champ magnétique selon une direction perpendiculaire à l'axe d'orifice 48 et perpendiculaire aux faces supérieure 40 et inférieure 42.

De préférence, le premier élément de guidage 34a est identique au second élément de guidage 34b. Chaque premier et second élément de guidage 34a, 34b est en outre désigné par la référence générale 34 sur les figures.

Les éléments de guidage 34 sont, dans l'exemple représenté, des tôles. Par exemple, les éléments de guidage 34 sont des tôles métalliques.

Le premier élément de guidage 34a du champ magnétique est par exemple fixé sur la face supérieure 40 et le second élément de guidage 34b du champ magnétique est fixé sur la face inférieure 42. Chaque élément de guidage 34 s'étend par exemple dans un plan parallèle à la face supérieure 40 ou inférieure 42 respectivement sur laquelle il est fixé. Chaque élément de guidage 34 s'étend de préférence au-delà du corps 30, notamment au-delà de la face avant 45. Plus particulièrement, chaque élément de guidage 34 s'étend au-delà du corps 30 de sorte que les bornes électriques 28 sont intercalées entre les éléments de guidage 34 lorsqu'elles sont reçues dans les orifices 47.

Les éléments de guidage 34 guident le champ magnétique généré par les éléments magnétiques 32 de sorte que le champ magnétique soit sensiblement maintenu entre le premier 34a et second 34b élément de guidage.

En d'autres termes, le premier et second éléments de guidage 34a, 34b sont configurés pour canaliser le champ magnétique B entre eux

Le corps 30 comprend en outre des ailettes 50 configurées pour fragmenter l'arc électrique. Les ailettes 50 font saillie de la face avant 45 et s'étendent selon une direction parallèle aux axes d'orifice 48 et perpendiculaire à cette face avant 45.

Les ailettes 50 comprennent des faces latérales 52 parallèles entre elles. La face latérale 52 d'une ailette 50 est, par exemple, orientée vers la face latérale 52 d'une ailette 50 voisine.

Les ailettes 50 sont, par exemple, espacées entre elles d'une distance égale à environ 5 mm.

Plus particulièrement, le corps 30 comporte un groupement d'au moins deux ailettes 50 agencé entre les orifices 47 de chaque paire d'orifices.

Dans l'exemple représenté sur les figures, trois ailettes 50 sont fixés sur la face avant 45 entre les orifices 47 de chaque paire d'orifices. Dans un autre exemple, quatre ailettes 50 sont fixés sur la face avant 45 entre les orifices 47 de chaque paire d'orifices.

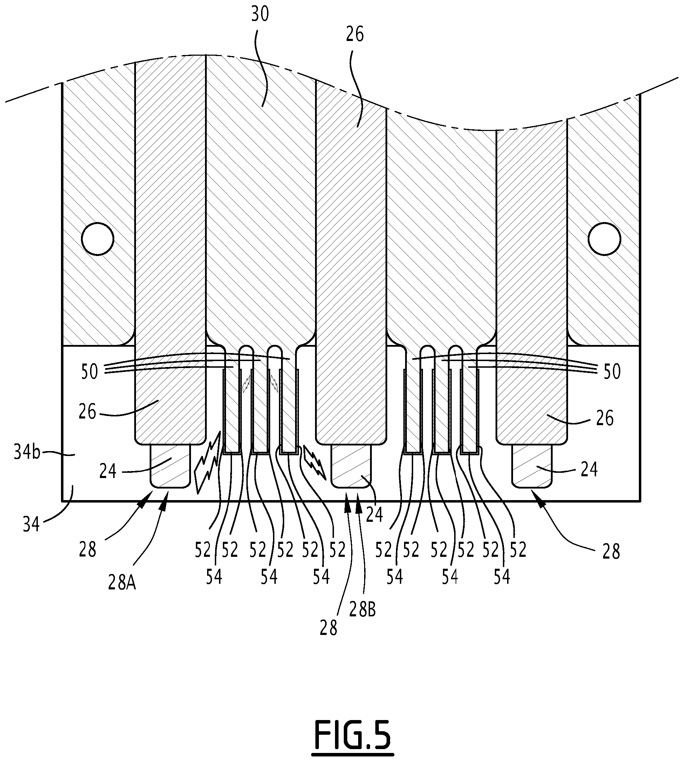

Les ailettes 50 sont, par exemple, munis de cavaliers conducteurs visibles sur la figure 5 qui sont configurés pour favoriser le passage du courant électrique de l'arc électrique. Un cavalier conducteur est un élément conducteur comprenant deux parois latérales en regard l'une de l'autre, propre à recouvrir au moins partiellement une face latérale 52 respective d'une ailette 50, et un élément de liaison reliant les deux parois latérales.

Selon l'exemple représenté sur la figure 5, chaque ailette 50 est couverte par un revêtement conducteur 54.

Le revêtement 54 est par exemple formé par un cavalier.

Le revêtement 54 comprend par exemple un matériau présentant une résistance élevée contre des arcs électriques. Le matériau est par exemple un métal inoxydable.

Le revêtement 54 couvre par exemple une extrémité de l'ailette 50 ainsi qu'au moins la moitié de chaque face latérale 52. Dans l'exemple de la figure 5, chaque revêtement 54 couvre environ deux tiers de la face latérale 52.

Les ailettes 50 sont configurées pour fragmenter un arc électrique susceptible de s'établir entre deux bornes électriques 28, comme cela est montré par exemple sur la figure 5.

En référence aux figures 3 à 5, le fonctionnement du système d'alimentation 1, et en particulier du dispositif de protection 20, va maintenant être décrit.

Lorsqu'un arc électrique se forme, il se propage dans le système d'alimentation 1. Par exemple, lorsqu'un arc électrique se forme dans l'interrupteur 22, l'arc électrique se propage dans les câbles électriques 16 en direction du dispositif de protection 20 disposé entre l'interrupteur 22 et le moteur 12.

Les éléments magnétiques 32 génèrent un champ magnétique selon une direction perpendiculaire aux faces supérieure 40 et inférieure 42.

Un premier exemple d'établissement d'arc est montré sur la figure 3. Lorsque le courant circule dans les âmes conductrices 24 selon une première direction, un arc électrique s'établit à partir de la borne électrique 28A vers la borne électrique 28B. L'arc électrique présente une direction de courant I1.

L'arc électrique est dévié par le champ magnétique B orthogonal au courant électrique de l'arc électrique par une force résultante F1. La direction de la force résultante F1 est perpendiculaire à un plan formé par le champ magnétique B et le courant I1. La force résultante F1 est calculée comme suit :

$$F = B \cdot I \cdot L$$

avec :

    B: valeur du champ magnétique ;
    I : valeur du courant de l'arc électrique ;
    et L : longueur de l'arc électrique soumis au champ magnétique.

Le vecteur de la force résultante F1 est le produit vectoriel du champ magnétique par la valeur du vecteur courant, multiplié par la longueur de l'arc électrique soumise au champ magnétique.

L'arc électrique, dévié par la force résultante F1, suit une courbe C1, comme visible dans la figure 3. L'arc électrique est éloigné du corps 30. La déviation de l'arc électrique est également appelée « soufflage ».

La courbe C1 présente une longueur plus importante qu'une distance minimale entre les bornes électriques 28A et 28B. La tension de l'arc électrique est augmentée par rapport à un arc électrique non-dévié. Le courant de l'arc électrique est réduit.

Par exemple, lorsque le courant est un courant alternatif, l'arc électrique s'éteint lors du passage par zéro du courant dans les âmes conductrices 24.

Par « passage par zéro du courant », il est entendu un changement de la direction du courant dans les âmes conductrices 24.

Un second exemple d'établissement d'arc est montré sur la figure 4.

Lorsque le courant circule dans les âmes conductrices 24 selon une seconde direction, opposée à la première direction, l'arc électrique s'établit à partir de la borne électrique 28A vers la borne électrique 28B (voir figure 4), selon une direction de courant I2 de l'arc électrique. Lors de l'établissement de l'arc électrique, l'arc est dévié par le champ magnétique B, et plus précisément par une force résultante F2, électrique selon une courbe C2. L'arc électrique est dévié vers les ailettes 50.

La force résultante F2 est par exemple parallèle aux axes d'orifices 48. La force résultante F2 est perpendiculaire à un plan formé par le champ magnétique B et le courant de l'arc I2. Le calcul de la force résultante F2 correspond au calcul de la force résultante F1.

La déviation de l'arc électrique vers les ailettes 50 est également appelée « aspiration ».

Lorsque l'arc électrique entre en contact avec une ailette 50, l'arc est fragmenté en plusieurs arcs électriques qui présentent une intensité réduite. Le fait qu'un arc électrique est fragmenté est montré sur la figure 5 par des flashs de taille réduite.

L'arc électrique est ensuite transmis d'une ailette 50 à l'autre. Lors de la transmission, l'arc électrique est atténué par décharge électrique sur les ailettes 50 et sur les revêtements 54. Dans l'exemple de la figure 5, l'arc électrique est ensuite transmis à la borne électrique 28A.

Par exemple, lorsque le courant est un courant alternatif, l'arc électrique fractionné entre les ailettes 50 s'éteint lors du passage par zéro du courant dans les âmes conductrices 24.

Le système d'alimentation 1 et le dispositif de protection 20 présentent plusieurs avantages.

Le fait d'utiliser un moteur à aimants permanents permet de réduire la masse du moteur et du volume du moteur. Lorsque le moteur est un moteur à aimants permanents, le moteur est susceptible d'induire une tension dans les câbles électriques 16 lors d'un déplacement du véhicule ferroviaire, ce qui peut former un arc électrique.

Le dispositif de protection 20 permet notamment de protéger des éléments disposés en aval du dispositif de protection 20 contre l'arc électrique dans le système d'alimentation 1, c'est-à-dire des éléments du système d'alimentation 1 qui sont disposés entre le dispositif de protection 20 et le moteur électrique 12.

Le dispositif de protection 20 permet en outre de prolonger l'arc électrique entre les bornes électriques 28, ce qui réduit le courant de l'arc électrique. Une prolongation présente plusieurs avantages.

Le fait de réduire le courant de l'arc électrique réduit les capacités destructrices de l'arc électrique. Les câbles électriques 16 sont mieux protégés. Le dispositif de protection 20 permet d'éviter un réamorçage de l'arc électrique.

En outre, l'éloignement du flash contribue en outre à mieux protéger le matériau du corps 30 contre des effets thermiques de l'arc électrique.

**Revendications**

1. Dispositif de protection (20) d'au moins deux câbles électriques (16) contre un arc électrique, chaque câble électrique (16) comprenant au moins une borne électrique (28, 28A, 28B), le dispositif de protection (20) comprenant :

    - un corps (30) comprenant :

        + une face avant (45) dans laquelle sont ménagés des orifices (47) destinés à recevoir chacun la borne électrique (28, 28A, 28B) de l'un respectif des câbles électriques (16),
        + des première et deuxième faces (40, 42) disposées de part et d'autre de la face avant (45), chaque orifice (47) s'étendant selon un axe d'orifice (48), les axes d'orifices (48) s'étendant parallèlement aux première et deuxièmes faces (40, 42),

    le dispositif de protection (20) étant **caractérisé en ce qu'**il comprend en outre au moins un élément magnétique (32), chaque élément magnétique étant fixé sur la première face (40) ou la deuxième face, le ou les éléments magnétiques (32) générant ensemble un champ magnétique (B) ; et

**en ce que** le dispositif de protection (20) comprend en outre un premier élément de guidage (34a) du champ magnétique (B) fixé à la première face (40), et un second élément de guidage (34b) du champ magnétique (B) fixé à la deuxième face (42), les premier et second éléments de guidage (34a, 34b) étant configurés pour canaliser le champ magnétique (B) entre eux, les éléments de guidage (34a, 34b) s'étendant de préférence au-delà du corps (30) de sorte que les bornes électriques (28, 28A, 28B) sont intercalées entre les éléments de guidage (34a, 34b) lorsqu'elles sont reçues dans les orifices (47).

2.  Dispositif de protection (20) selon la revendication 1, dans lequel le corps comprend plusieurs éléments magnétiques comprenant au moins un premier élément magnétique (32), fixé sur la première face (40), et au moins un second élément magnétique (32), fixé sur la deuxième face (42), les premiers et seconds éléments magnétiques (32) générant ensemble le champ magnétique (B).

3.  Dispositif de protection (20) selon la revendication 1 ou 2, dans lequel chaque orifice (47) s'étend selon un axe d'orifice (48), le corps (30) comprenant en outre, sur sa face avant (45), des ailettes (50) configurées pour fragmenter l'arc électrique, les ailettes (50) s'étendant selon une direction parallèle à chaque axe d'orifice (48).

4.  Dispositif de protection (20) selon l'une quelconque des revendications 1 à 3, dans lequel le corps (30) comprenant au moins une paire d'orifices (47), le corps (40) comportant un groupement d'au moins deux ailettes (50) agencé entre les orifices (47) de chaque paire d'orifices.

5.  Dispositif de protection (20) selon l'une quelconque des revendications 3 à 4, dans lequel chaque ailette (50) est couverte, au moins partiellement, par un revêtement (54) comprenant un métal inoxydable.

6.  Dispositif de protection (20) selon l'une quelconque des revendications 1 à 5, dans lequel le ou les éléments magnétiques (32) sont orientés de manière à générer le champ magnétique (B) selon une direction perpendiculaire aux première et deuxièmes faces (40, 42).

7.  Dispositif de protection (20) selon la revendication 2, dans lequel le corps (30) présente des premières cavités (49) sur la première face (40) et deuxièmes cavités sur la deuxième face (42), les premiers éléments magnétiques (32) étant reçus dans les premières cavités (49) et les seconds éléments magnétiques (32) étant reçus dans les deuxièmes cavités.

8.  Système d'alimentation (1) pour un véhicule ferroviaire comprenant :

    - au moins un moteur électrique (12) de traction ;
    - une connexion électrique (14) configurée pour alimenter électriquement le moteur électrique (12), la connexion électrique (14) comprenant au moins un dispositif de protection (20) selon l'une quelconque des revendications 1 à 7.

9.  Système d'alimentation (1) selon la revendication 8, dans lequel le moteur électrique (12) est un moteur à aimants permanents.

**Patentansprüche**

1.  Schutzvorrichtung (20) für mindestens zwei elektrische Kabel (16) gegen einen Lichtbogen, jedes elektrische Kabel (16) umfassend mindestens einen elektrischen Anschluss (28, 28A, 28B), die Schutzvorrichtung (20) umfassend:

    - einen Körper (30), umfassend:

        + eine Vorderseite (45), in der Öffnungen (47) vorgesehen sind, die jeweils zum Aufnehmen des elektrischen Anschlusses (28, 28A, 28B) eines jeweiligen der elektrischen Kabel (16) bestimmt sind,
        + eine erste und eine zweite Seite (40, 42), die auf beiden Seiten der Vorderseite (45) angeordnet sind, wobei sich jede Öffnung (47) entlang einer Öffnungsachse (48) erstreckt, wobei sich die Öffnungsachsen (48) parallel zu der ersten und der zweiten Seite (40, 42) erstrecken,

    wobei die Schutzvorrichtung (20) **dadurch gekennzeichnet ist, dass** sie ferner mindestens ein magnetisches Element (32) umfasst, wobei jedes magnetische Element an der ersten Seite (40) oder der zweiten Seite befestigt ist, wobei das oder die magnetischen Elemente (32) zusammen ein Magnetfeld (B) erzeugen; und
    dass die Schutzvorrichtung (20) ferner ein erstes Leitelement (34a) für das Magnetfeld (B), das auf der ersten Seite (40) befestigt ist, und ein zweites Leitelement (34b) für das Magnetfeld (B), das auf der zweiten Seite (42) befestigt ist, umfasst, wobei das erste und das zweite Leitelement (34a, 34b) konfiguriert sind, um das Magnetfeld (B) dazwischen kanalisieren, wobei sich die Leitelemente (34a, 34b) vorzugsweise über den Körper (30) hinaus erstrecken, sodass die elektrischen Anschlüsse (28, 28A, 28B) zwischen den Leitelementen (34a, 34b) angeordnet sind, wenn sie in den Öffnungen (47) aufgenommen sind.

**2.** Schutzvorrichtung (20) nach Anspruch 1, wobei der Körper eine Vielzahl von magnetischen Elementen umfasst, umfassend mindestens ein erstes magnetisches Element (32), das an der ersten Seite (40) befestigt ist, und mindestens ein zweites magnetisches Element (32), das an der zweiten Seite (42) befestigt ist, wobei das erste und das zweite magnetische Element (32) zusammen das Magnetfeld (B) erzeugen.

**3.** Schutzvorrichtung (20) nach Anspruch 1 oder 2, wobei sich jede Öffnung (47) entlang einer Öffnungsachse (48) erstreckt, der Körper (30) ferner umfassend Rippen (50) auf seiner Vorderseite (45), die konfiguriert sind, um den Lichtbogen zu fragmentieren, wobei sich die Rippen (50) in eine Richtung parallel zu jeder Öffnungsachse (48) erstrecken.

**4.** Schutzvorrichtung (20) nach einem der Ansprüche 1 bis 3, der Körper (30) umfassend mindestens ein Paar von Öffnungen (47), der Körper (30) umfassend eine Anordnung von mindestens zwei Rippen (50), die zwischen den Öffnungen (47) von jedem Paar von Öffnungen angeordnet sind.

**5.** Schutzvorrichtung (20) nach einem der Ansprüche 3 bis 4, wobei jede Rippe (50) zumindest teilweise durch eine Beschichtung (54) abgedeckt ist, umfassend ein rostfreies Metall.

**6.** Schutzvorrichtung (20) nach einem der Ansprüche 1 bis 5, wobei das oder die mehreren magnetischen Elemente (32) auf eine Weise ausgerichtet sind, dass sie das Magnetfeld (B) in eine Richtung senkrecht zu der ersten und der zweiten Seite (40, 42) erzeugen.

**7.** Schutzvorrichtung (20) nach Anspruch 2, wobei der Körper (30) erste Hohlräume (49) auf der ersten Seite (40) und zweite Hohlräume auf der zweiten Seite (42) aufweist, wobei die ersten magnetischen Elemente (32) in den ersten Hohlräumen (49) aufgenommen sind und die zweiten magnetischen Elemente (32) in den zweiten Hohlräumen aufgenommen sind.

**8.** Stromversorgungssystem (1) für ein Schienenfahrzeug, umfassend:

- mindestens einen elektrischen Fahrmotor (12);
- eine elektrische Verbindung (14), die für die elektrische Versorgung des Elektromotors (12) konfiguriert ist, die elektrische Verbindung (14) umfassend mindestens eine Schutzvorrichtung (20) nach einem der Ansprüche 1 bis 7.

**9.** Stromversorgungssystem (1) nach Anspruch 8, wobei der Elektromotor (12) ein Permanentmagnetmotor ist.

**Claims**

**1.** A protective device (20) for protecting at least two electrical cables (16) against an electric arc, each electrical cable (16) comprising at least one electrical terminal (28, 28A, 28B), the protective device (20) comprising:

- a body (30) comprising:

+ a front face (45) in which holes (47) are formed, each for receiving the electrical terminal (28, 28A, 28B) of a respective one of the electrical cables (16),
+ first and second faces (40, 42) disposed on either side of the front face (45), each hole (47) extending along a hole axis (48), the hole axes (48) extending parallel to the first and second faces (40, 42),

the protective device (20) being **characterised in that** it further comprises at least one magnetic element (32), each magnetic element being attached to the first face (40) or the second face, the magnetic element or elements (32) together generating a magnetic field (B); and
**in that** the protective device (20) further comprises a first guide member (34a) of the magnetic field (B) attached to the first face (40), and a second guide member (34b) of the magnetic field (B) attached to the second face (42), the first and second guide members (34a, 34b) being configured to channel the magnetic field (B) therebetween, the guide members (34a, 34b) preferably extending beyond the body (30) such that the electrical terminals (28, 28A, 28B) are interposed between the guide members (34a, 34b) when received in the holes (47).

**2.** The protective device (20) of claim 1, wherein the body comprises a plurality of magnetic elements comprising at least one first magnetic element (32), attached to the first side (40), and at least one second magnetic element (32), attached to the second side (42), the first and second magnetic elements (32) together generating the magnetic field (B).

**3.** The protective device (20) of claim 1 or 2, wherein each hole (47) extends along a hole axis (48), the body (30) further comprising, on its front face (45), fins (50) configured to fragment the electric arc, the fins (50) extending in a direction parallel to each hole axis (48).

**4.** The protective device (20) according to any one of claims 1 to 3, wherein the body (30) comprises at least one pair of holes (47), the body (30) having an array of at least two fins (50) arranged between the holes (47) of each pair of holes.

**5.** The protective device (20) according to any of claims 3 to 4, wherein each fin (50) is covered, at least partially, by a coating (54) comprising a stainless metal.

**6.** The protective device (20) according to any one of claims 1 to 5, wherein the one or more magnetic elements (32) are oriented so as to generate the magnetic field (B) in a direction perpendicular to the first and second faces (40, 42).

**7.** The protective device (20) of claim 2, wherein the body (30) has first cavities (49) on the first face (40) and second cavities on the second face (42), the first magnetic elements (32) being received in the first cavities (49) and the second magnetic elements (32) being received in the second cavities.

**8.** A power supply system (1) for a railway vehicle comprising:

- at least one electric traction motor (12);
- an electrical connection (14) configured to electrically supply the electric motor (12), the electrical connection (14) comprising at least one protective device (20) according to any of claims 1 to 7.

**9.** The power supply system (1) of claim 8, wherein the electric motor (12) is a permanent magnet motor.

**FIG.1**

**FIG.2**

20

34a

34

26 24

26 24

26 24

28

30

44

45

34

34b

28

28A

28

C1

B

F1

I1

28B

# FIG.3

## FIG.4

## FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5004874 A
- DE 112015002740 T5
- FR 3050885 A1